Europäisches Patentamt

European Patent Office

Office européen des brevets

(19)

(11) Publication number: **0 108 307**
A1

## (12) EUROPEAN PATENT APPLICATION

(21) Application number: 83110481.5

(22) Date of filing: 20.10.83

(51) Int. Cl.³: **B 29 C 17/07**

(30) Priority: 08.11.82 US 439799
28.06.83 US 508895

(43) Date of publication of application:
16.05.84 Bulletin 84/20

(84) Designated Contracting States:
AT BE CH DE FR GB IT LI LU NL SE

(71) Applicant: Adjusta-Post Manufacturing Co.
3960 Summit Road
Norton Ohio 44203(US)

(72) Inventor: Vaidya, Deepak V.
7801 N. Lamar Suite D-95
Austin Texas 78752(US)

(74) Representative: Wagner, Karl H.
P.O. Box 246 Gewürzmühlstrasse 5
D-8000 Munich 22(DE)

(54) Injection-blow molding of plastic globes.

(57) A method and apparatus for the injection-blow molding of lighting quality plastic globes is disclosed. The invention includes the steps of devising a preform of a suitable geometry from a chosen plastic, the preform being basically of a cylindrical shape and having a sturdy nipple at one end thereof opposite an open end, rotating the preform during the heating process about a central axis passing through the nipple, the nipple being received within a recess for prefect registration and low heat transfer, then introducing the heated preform into a mold cavity, the nipple again being received in a recess for registration purposes, inflating the preform to fill the mold completely, allowing it to cool and demolding the blown product. On removal of the nipple, a perfect globe is obtained with a good radially uniform wall thickness.

EP 0 108 307 A1

# INJECTION-BLOW MOLDING OF PLASTIC GLOBES

## CROSS-REFERENCE

This is a continuation-in-part of commonly owned application Serial No. 439,799, filed November 8, 1982, which is incorporated herein by reference.

## BACKGROUND

Heretofore it has been known to form glass globes for lighting fixtures. However, the cost of such globes coupled with the weight and likelihood of breakage of the same, has given way to a desirability of forming globes for lighting fixtures from plastics. The material for such plastic globes is typically cheaper, the overall weight is substantially less, and the likelihood of breakage is considerably less than the prior glass globes. As a point of fact, it has been desired to form globes of acrylics, such as polymethylmethacrylate. Other suitable materials are known to be polycarbonate, polyethylene, polystyrene and its copolymers and homopolymers, and butyrate. All of these plastics, in their pure form, are highly transparent, exceptionally strong, lightweight, and relatively inexpensive. However, the forming of spheres or globes of such materials having uniform wall thickness, high clarity, and absent surface blemishes has heretofore been extremely difficult to achieve on a production basis. To achieve this technique, albeit unsatisfactorily, the prior art has taught rotational molding wherein granular plastic material is placed in a mold, nutated in an oven, and subsequently cooled to a setting temperature. The resulting globes have lacked clarity and have been characterized by extensive surface blemishes for the particular reason that heating of the granular plastic makes the imperfections of such plastic apparent in the melted mass.

The blow molding of hollow articles by the setting up of a heat softened material against the inner surface of a hollow mold has been practiced for a great many years with a wide variety of materials, including super-cooled liquids such as glass which are solidified by chilling the molds, or heat reactive materials such as thermosetting polymers which are set up by heating the molds, or thermoplastic materials such as the commercial plastics which are usually set up by contact with molds at ambient temperatures.

With all of these materials, several manipulative procedures may be used. In dip-blow molding, one end of a suitable tube is dipped in a molten mass of material and the quantity of molten material picked up during withdrawal of the tube is expanded inside a hollow mold by partially introducing the dipped end of the tube into the mold and blowing air in from the other end of the tube.

In extrusion-blow molding, a thermosetting or thermoplastic material is first extruded into a tubular parison open at both ends which, while still in a soft and pliable condition, is placed at precise time intervals by generally complex machines between the two halves of a hollow mold such that when the mold is completely closed, one end of the tubular shape is pinched shut between the mold halves to retain air and the other end is held open at the other end of the hollow mold through which air is introduced under pressure into the parison to expand it radially to conform to the inner surface of the mold.

In injection-blow molding, a thermoplastic material is first injection molded into a cylindrical preform already closed at one end, which preform, while still in a hot and pliable condition, or after cooling and reheating to a soft and pliable condition, is held suspended inside a hollow mold such that the opening in the mold externally grasps the open end of the preform, through which compressed air is introduced into the preform to expand it both axially and radially to form against the inner surface of the mold.

If radial uniformity is needed in a large blow molded plastic article, a fairly complex auxiliary mechanism is required in injection-blow molding to keep the closed end of the preform centered during the axial and radial expansion occurring simultaneously. For example, a shaft may be introduced through the open end of the preform and engaged at the center of the inside of the closed end. However, in such a procedure, it is difficult to register the shaft dead center because of slipperiness of the preform and the shaft.

Extrusion-blow molding offers radial uniformity but at the cost of leaving behind in the final article a large and undesirable scar resulting from the parison pinch-off. Dip-blow molding, on the other hand, is used for making glass articles and is unsuitable for making plastic products.

0108307

-4-

Hence, large hollow spheres or other radially symmetrical objects cannot be produced uniformly at all to high aesthetic standards, from impact resistant or other commercial plastics, in any simple embodiment of the foregoing procedures.

Prior art also includes U.S. Patent Nos. 3,202,739; 3,294,883; 3,761,550; 3,865,912; 4,044,086; 3,801,690; 4,026,984; 4,049,767; and 3,719,735.

## SUMMARY OF THE INVENTION

I have invented a process which is especially adapted for molding large radially symmetrical plastic enclosures for lighting purposes because it not only produces the desired hollow shape but also, with the very simplest equipment and procedure, automatically provides radial uniformity in the wall of the enclosure at any given axial position, which is so desirable for uniform light transmission.

By some simple additions or modifications to the equipment or procedure, the relative thickness of different parts of the hollow enclosure can be adjusted in an axial direction, while maintaining radial uniformity, to meet special requirements for different products or different types of service requirements of the same products.

The equipment needed in the simplest form of the invention is only a divided hollow mold with a radially symmetrical cavity about its axis into which cavity protrudes axially a spring-biased shaft capable of withdrawing out of the cavity upon urging and having a recess in its end inside the cavity, together with means for heating a plastic preform to make it uniformly soft and pliable and other means for expanding it with compressed air.

A presently preferred material is a well known clear or transparently tinted acrylic such as polymethylmethacrylate having a high degree of light transmission capability. However, many other kinds of thermoplastic materials can be used, including polycarbonates, polyethylenes, polypropylenes, polystyrenes, acetates, butyrates, ABS plastics, along with copolymers of some of the foregoing materials and also their blends with each other. Even thermoplastic elastomers may be used for products not required to be rigid.

The only requirements are that the material be a thermoplastic that can initially be molded into a cylindrical preform which, after cooling to ambient temperatures and storage, can be later reheated to a soft and pliable condition with sufficient melt strength to enable its expansion by compressed air and subsequently set up on contact with the inner surface of a hollow mold maintained at ambient temperatures.

Neither the materials nor most of the equipment needed are critical to this invention nor essentially novel. Plastics molders have known suitable materials for blow molding lighting enclosures for many years, but have lacked procedures for fabricating large hollow products to high aesthetic standards in a simple and economical way. It is this lack which is supplied by the present invention.

The new procedure of this invention consists of making from a thermoplastic material, by injection molding, an essentially cylindrical preform open at one end, closed at the opposite end and possessing a characteristic sprue nipple, which is usually removed after injection molding but, for the purpose of this process is intentionally retained in its position at the center of the closed end, which nipple is designed to be of sufficient dimensions and strength for centralizing the preform under lateral stresses typically experienced by it during simultaneous axial and radial expansion, cooling the said preform after it is made and reheating it before blow molding by first raising its entire mass to a temperature just below its softening point and then by further heating it in a suitable temperature gradient by rotating it perfectly concentrically around its longitudinal axis by registering the nipple in a recess at the end of a shaft located axially beyond the closed end of the preform, which shaft has a low heat conductivity, removing the heated preform when sufficiently soft and pliable, transferring it to a divided open mold such that the nipple registers in a recess at the end of a spring-biased shaft protruding axially into the mold cavity, closing the mold completely so as to grasp externally the open end of the preform in an opening in the mold, sealing the open end of the preform with a flat plate bearing a gasket, and inflating it with compressed air through a hole in the sealing plate till the plastic conforms to the inner surface of the hollow mold.

When this procedure is followed, it is found that by first raising the preform to a temperature just below its softening point and maintaining it there till exposed to more intense heat, it is possible to get the entire preform mass into a soft and pliable condition quickly enough, during the second stage of heating under rotation in a temperature gradient, to avoid getting the outer surface of the preform plastic blemished from overheating.

The registration of the nipple in an axially located shaft positioned beyond the closed end of the preform during gradient heating permits the preform, which is rotated by means located concentrically at its open end, to be radially uniformly heated. At the same time, the low heat conductivity of the material of the shaft accommodating the nipple maintains the nipple in a relatively cool and firm condition and prevents it from swelling and shrinking excessively in the intense heat while the rest of the preform becomes sufficiently soft and pliable for expanding to the required size.

When the preform is transferred to the open divided hollow mold and the relatively cool and firm nipple is registered in the recess at the end of the shaft protruding axially into the mold cavity, upon closure of the mold the preform is held very snugly and concentrically around the axis of the hollow mold cavity. When the preform is inflated from this position upon sealing of its open end, it expands both axially and radially, thereby pushing out of the mold cavity the spring-biased shaft resting against its closed end. As the shaft is made to withdraw axially out of the mold cavity, it guides the nipple located in the center of the preform's closed end along the common axis of the preform and the mold cavity and prevents the center of the closed end of the preform from moving laterally from non-uniform stresses induced by minor variations in wall thickness of the preform, which are inevitable when large and long preforms are being made. Moreover, the firmness of the nipple prevents it from bending and slipping out of the recess at the tip of the withdrawing shaft.

Upon full expansion of the preform, the spring-biased shaft is completely pushed out of the mold cavity and the plastic material conforms to the inner surface of the hollow mold and sets up on contact with the mold material which is at a substantially lower temperature than that of the plastic during expansion. The final symmetrical article has a radially uniform wall thickness ideal for high quality lighting enclosures.

After the product is demolded, the sprue nipple, which is tiny in comparison to the size of the large blow molded article, is removed by any of a number of convenient means and the external spot from which it is removed is either finished to blend in with the surrounding surface texture or covered with a small trademark label or even left uncovered without detracting from the overall aesthetics of the finished product. The open end opposite the nipple is either left as it is with the flange around the open end intended to serve a further purpose such as the external holding of the article, or is routed to yield a hole of a suitable size to accommodate, say, a fitter in a lighting system.

In the case of manufacture of lighting enclosures from thermoplastic materials such as acrylics, polycarbonates or polyethylenes, heat, which is the influence causing the material to become soft and pliable, can be supplied to the preform in any number of convenient forms since uniformity of heating in the axial direction is not particularly desirable and radial heating symmetry necessarily results from the uniform concentric rotation of the preform around its longitudinal axis.

For example the preform can be rotated concentrically in a cylinder having a supply of hot air directly and symmetrically below the closed end of the preform.

Radiant heating is also possible. Several heat lamps directed at the preform and affixed so as to cover the length of the preform give good results.

Radiant heating can also be provided by fixing electric resistance heaters such as band or strip heaters to the outside of a cylinder at predetermined locations to give the desired heat gradient to a preform rotating concentrically inside the cylinder.

Microwaves and hot oil circulating in tubes positioned around the rotating preform are other means of providing heat to the preform.

Although the invention in its simplest form inherently produces a hollow object such as a lighting sphere symmetrical about its axis with a radially uniform wall which is generally less thick at radial points farther from the axis than at points closer to the axis, the procedure can easily be modified so as to alter the relative thickness of different parts of the sphere to induce the area of maximum expansion to be similar in thickness to that of the areas of least expansion, or to yield the greatest thickness in the area constituting the top of the sphere which may have to withstand most of the heat from the light source, or to obtain around the opening in the sphere a thick wall to withstand the pressures of clamping in a fitter. The simplest way to accomplish such a change in relative thickness is by modifying the heat transfer ability of different parts of the means generating the heating gradient either by appropriately altering the position of given heating elements or by proportionately reducing the quantity of heat energy being put out by heating elements in specific positions.

## BRIEF DESCRIPTION OF DRAWINGS

Fig. 1 is a front elevational view of a preform as used with the invention;

Fig. 2 is an illustrative front view of the top flange portion of the preform of Fig. 1 showing the same appropriately clamped for rotational heating;

Fig. 3 is an illustrative front view of the preform of Fig. 1 maintained within a heating chamber;

Fig. 4 is an illustrative front view of the heated preform maintained within a mold cavity with the mold being in section;

Fig. 5 is a front perspective view of the globe molded from the preform as in Fig. 4;

Fig. 6 is a front perspective view of the finished globe made according to the invention; and

Fig. 7 is an illustrative sectional view of the divided mold showing one half of the mold cavity with an opening at one end for accommodating the open end of the preform, and a spring-biased shaft extending into the cavity.

## DETAILED DESCRIPTION

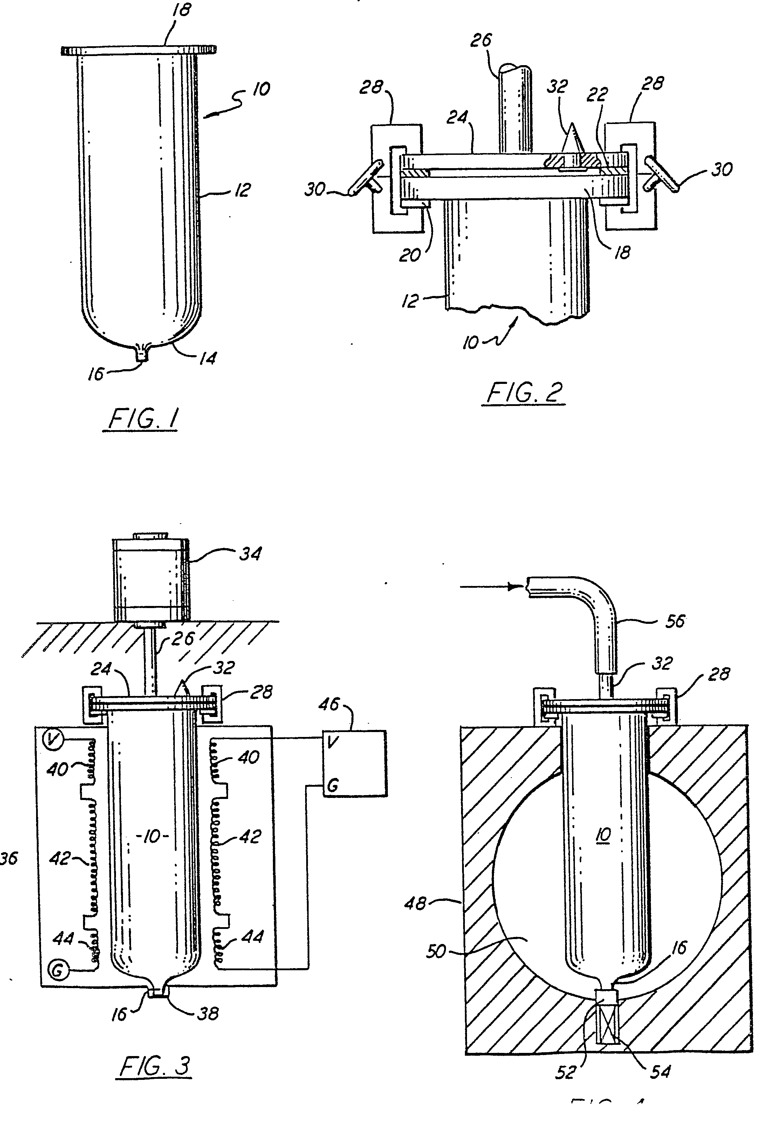

With reference now to Fig. 1, it can be seen that a preform is designated generally by the numeral 10. The preform 10 may be of any of the plastic materials identified above and is typically of a length of approximately 10-24 inches, a diameter of 2-1/2 - 8 inches, and a wall thickness on the order of 1/8 - 1/2 inch. The preform 10 includes a cylindrical body portion 12 leading to a closed end portion 14. Typically, the preform 10 is formed by an injection molding process, which molding process results in a characteristic nipple 16 at the closed end 14. The nipple 16 is typically of solid plastic material. At the end opposite the nipple 16 is a ring flange 18, the ring flange 18 being annular, with an opening corresponding to the inside diameter of the body portion 12.

In accordance with the invention, the preforms 10 are typically maintained within an oven or heating chamber to maintain a temperature throughout the entire plastic composition. This temperature varies depending on the plastic used. For example, acrylic is heated to 100° C., while polycarbonate is heated to approximately 150° C. It will be appreciated that the preforms may be maintained at other elevated temperatures, it simply being desired that the preform be at a temperature above that of ambient for a sufficient period of time to be heated completely through.

The preform 10 is then prepared for further heating by clamping the open end of the ring flange 18 as depicted in Fig. 2. Here, a bottom ring or annular disk 20 is positioned about the bottom of the ring flange 18 and a gasket 22 is placed about the upper circumferential surface thereof. A top disk 24 is then placed over the gasket 22 and thereby sealing the top opening of the preform 10. A motor shaft 26, sectionally shown, extends centrally from the top disk 24. Clamps 28 having appropriate lever arms 30 thereon, are then used to seal the disk 24 against the gasket 22. It should also be noted that a valve stem 32 communicates through the top plate 24 to the interior of the preform 10.

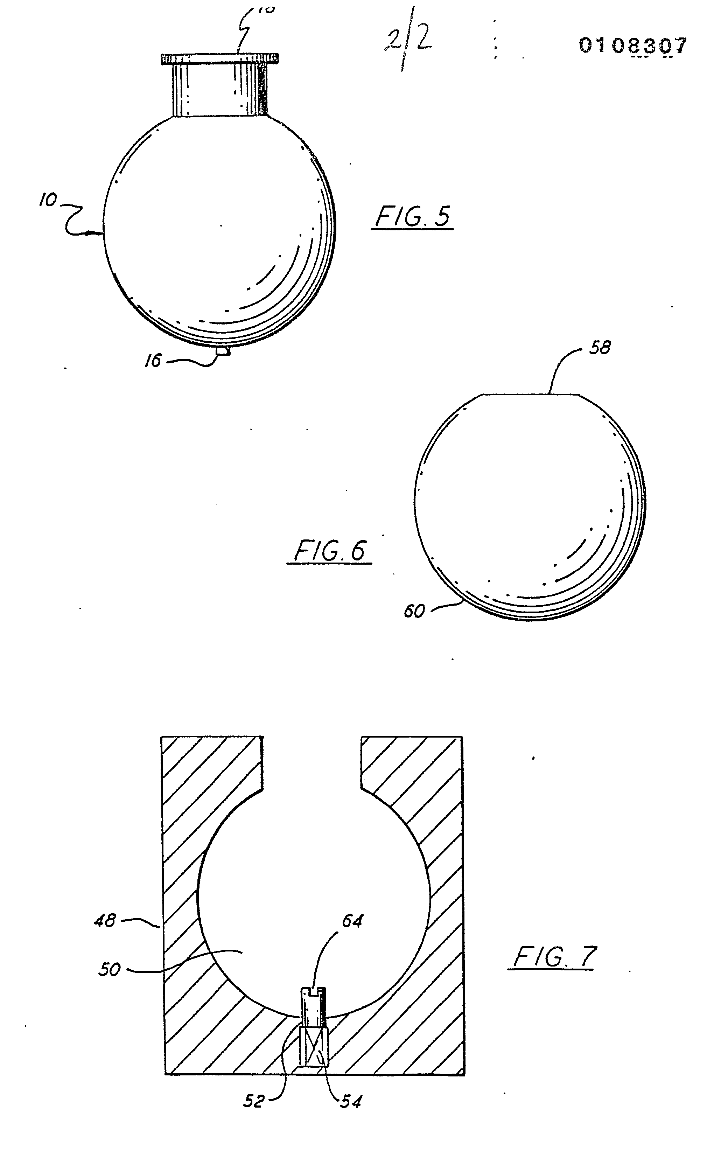

As shown in Fig. 3, the motor shaft 26 is appropriately connected to a motor 34 and the preform 10 is placed into a heat chamber 36. The nipple 16 is received in a non-heat-transferring receptacle 38 at the bottom of the heat chamber 36, such that as the motor 34 is caused to rotate, the shaft 26 rotates the preform 10 about the shaft axis, which axis proceeds through the center of the preform 10 to the nipple 16. Accordingly, there is true axial rotation of the preform 10. If required, cooling means may be provided in association with the receptacle 38 to assure that the nipple 16 will not melt therein. Maintained within the heat chamber 36 are strip heaters or coils 40-44.

Ultimately, a globe will be formed of the preform 10. Since the globe will be substantially spherical, it will be understood that the preform 10 will expand most greatly at the axial center portion thereof, with minimum expansion at either end thereof.

Such an expansion would typically result in varying wall thicknesses, the wall thickness of the globe being thinnest at the center thereof, and thickest at each end. In order to achieve a more uniform wall thickness, a temperature gradient is established in the preform 10 by the heat chamber 36. This is preferably achieved by providing upper and lower strip heaters or coils 40-44, which are more resistive than the middle heater 42, such that for a given current the heat output of the coils 40, 44 will exceed that of the coil 42. Accordingly, when the coils 40-44 are interconnected to a power source 46, effectively interconnecting them between a voltage V and ground G, greater heat is imparted to the preform 10 at the top and bottom portions thereof. The motor 34 causes the preform 10 to rotate about the central axis such that radially uniform heating is attained, with there being an axial heating gradient as just described within the preform 10, but with the radial heating of the walls of the preform 10 being substantially uniform.

The preform 10 is preferably brought to a temperature of approximately 120° C. - 200° C., the temperature varying with the plastic material being utilized. In any event, after the preform 10 has been rotated within the heat chamber 36 for a sufficient period of time to assure substantially homogeneous heating of the wall thickness of the preform, with an axial gradient, the preform 10 is removed from the chamber. It should at this time be understood that the valve 32 has allowed the interior of the preform 10 to vent to the atmosphere, obviating the possibility of an implosion or explosion of the preform.

Once removed from the heat chamber 36, the preform 10 is immediately placed within the cavity 50 of a mold 48, as shown in Figure 4. The cavity 50 is shown here as being spherical in order that a globe may be formed. Of course, other cavities 50 could take any of numerous geometric configurations. In any event, the nipple 16 of the preform 10 is received by a recess within a shaft 52, the shaft 52 being spring-biased as by a spring 54. Before receiving the nipple 16 of the preform 10, the shaft 52 would typically protrude upward and centrally into the cavity 50 by urging of the spring 54. As the preform 10 is placed within the cavity 50, the nipple 16 is held by the shaft 52 which is pressed against the closed end of the preform by the urging of the spring 54. It will be appreciated that a recess might have been provided at the bottom of the spherical portion of the cavity 50, much in the same manner as in the heat chamber 36 of Fig. 3. However, by providing the shaft 52 with a nipple-receiving recess therein, various sizes of preforms 10 may be used with the mold 48. Conversely, a single size of preform 10 may also be used with various mold sizes.

With the heated preform 10 within the cavity 50, a source of air pressure is connected to the valve stem 32 by means of a pressure hose 56. The air pressure causes the preform 10 to expand within the cavity 50 thereby pushing the shaft 52 axially out of the cavity and causing the preform to ultimately take the shape of the cavity which is the shape of a globe. With the preform 10 held by engagement of the nipple 16 with the shaft 52, there is no chance of internal shift of the preform axis as the globe is being formed, and this, coupled with the axial gradient heating discussed above, results in a globe of substantially uniform wall thickness.

As shown in Fig. 5, the result of the molding process of Fig. 4 is a globe-like structure still having the characteristic nipple 16 and the ring flange 18, the flange 18 now extending from a neck.

A finished globe 60 is shown in Fig. 6 and is obtained from the structure of Fig. 5 by cutting off the neck as with a band saw, and routing out the opening as at 58 for receiving a light mounting plate or the like. The nipple 16 is similarly cut off and may be buffed or simply covered with a small label. The resulting globe is of high purity, absent surface blemishes, of substantially uniform wall thickness, lightweight, and impact-resistant.

A preferred material for making the blow molded lighting fixtures is acrylic, technically called polymethyl methacrylate. An exemplary use of acrylic is:

Injection molded preforms of acrylic are first preheated from the ambient temperature to a temperature of 100° C. (212° F.). The preforms are maintained at that temperature till they are further heated to the blow molding temperature.

For blow molding the preforms, they are removed from the preheating oven and transferred to a heating cylinder maintained at approximately 200° C. (392° F.). They are rotated centrally in the cylinder such that the cylinder wall is about two inches away from the preform wall.

Preforms that have a nominal wall thickness of 1/4 inch are heated in the cylinder, while they are

-16-

rotating, for about four minutes each. To make globes of 16" and 18" diameters, the preforms need to be heated a little more than four minutes. For smaller size globes, a little less time is used.

The temperature of the acrylic at the end of those four minutes of heating is not accurately known. There are two temperature gradients one should be aware of. Along the length of the preform, the temperature is highest at the ends and lowest in the middle. Also, the temperature of the outer surface of the acrylic is higher than the inner surface, which is furthest from the cylinder wall.

Depending on the heating time and the specific part of the preform in question, the acrylic temperature would be in the range of 125 to 150° C. (260 to 300° F.).

At the end of the heating, the preforms are immediately transferred to the blow mold and inflated with air at ambient temperature at a pressure of 20 to 30 psi. The acrylic cools rapidly after touching the blow mold surface and the formed globe can be removed from the mold after release of the air within a minute after it is formed.

Figure 7 further illustrates the special apparatus used to practice the method of the invention. One half of the divided mold 48 is shown with a mold cavity 50 having a surface of a preselected shape corresponding to the desired outer configuration of the final product. The mold is open at one end for accommodating the open end of the preform (not shown). A shaft 52 is provided at the bottom of mold cavity 50. Shaft 52 is biased into cavity 50 by means of spring 54. A recess 64 is provided in the end of shaft 52 for receiving the nipple of the preform (not shown). Shaft 52 is retractable from cavity 50. Preferably, just the pressure of the expanding preform is needed to retract shaft 52. Alternatively, other means may be used. For example, shaft 52 could be screwed into mold 48 and retracted from mold 48 by unscrewing during expansion of the preform.

From the foregoing it can be seen that my invention includes a process for blow molding a seamless, hollow, radially symmetrical thermoplastic article having a uniform wall thickness at any given axial position. In its preferred embodiments the process includes the step of providing an essentially cylindrical preform of a thermoplastic material. The preform has an open and a closed end. The longitudinal axis of the preform passes through the two ends. The preform also has a nipple on the outside of the closed end along the longitudinal axis. The next step in the process involves registering the nipple in a recess on a shaft that also has a longitudinal axis. The preform is then rotated about an axis of rotation coincident with the longitudinal axis of the preform and with the longitudinal axis of the first shaft. The preform is heated during the rotation until the preform is sufficiently heated to be pliable and yet the nipple is still firm. The preform is then removed from the shaft and transferred to an open divided mold. The mold has a cavity with a longitudinal axis. The inner surface of the cavity is of a preselected shape that is symmetrical about the longitudinal axis of the cavity. This preselected shape corresponds to the outer shape of the final article.  The nipple is then registered in
the second recess which is formed on the end of the second
shaft which protudes into the mold cavity.  This second
shaft is spring-biased into the cavity.  The shaft lies
along the longitudinal axis of the cavity.  The open
end of the pliable preform is then grasped by closing
the mold.  In this manner the longitudinal axis of the
preform is held coincident with the longitudinal axis
of the cavity.  A flat plate is used to seal the open
end of the pliable preform.  The preform is then
inflated by introducing compressed air through a hole
in the flat plate.  As the preform expands it pushes
the second shaft out of the mold cavity.  The preform
then conforms to the inner surface of the cavity to form
the article from the preselected shape of the cavity.
After cooling, the partially formed article is removed
from the mold and the nipple is removed from the article
to form the final article.

The invention has been described in detail
with particular emphasis on the preferred embodiments,
but it should be understood that there are variations
and modifications within the scope and spirit of the
invention.

What I claim is:

1.      A process for blow molding a seamless, hollow, radially symmetrical thermoplastic article having a radially uniform wall thickness at any given axial position, comprising the steps of:

making an essentially cylindrical preform of a thermoplastic material, said preform having an open end, a closed end and a longitudinal axis through said ends, said preform further comprising a nipple on the outside of said closed end along said longitudinal axis;

registering said nipple in a first recess on the end of a first shaft with a longitudinal axis;

rotating said preform on said first shaft about an axis of rotation coincident with said longitudinal axis of said preform and with said longitudinal axis of said first shaft;

heating said preform during said rotation;

removing said preform from said first shaft after said preform is sufficiently heated to be pliable and while said nipple is still firm;

transferring said pliable preform to an open divided mold with a cavity having a longitudinal axis, said cavity further comprising an inner surface of a preselected shape;

registering said firm nipple in a second recess, said second recess being formed at the end of a second shaft protruding into said mold cavity along said longitudinal axis of said cavity.

grasping said pliable preform by closing said mold so as to grasp said open end of said preform, said longitudinal axis of said cavity being coincident with said longitudinal axis of said preform;

sealing said open end of said pliable preform with a flat plate;

0108307

cooling said article;

opening said mold and removing said cooled article;

removing said nipple from said article, characterized in that said second shaft is spring-biased into said cavity, and is retractable only along said longitudinal axis of said cavity and that after sealing said pliable preform is inflated with compressed air introduced through a hole in said flat plate until said preform pushes said second shaft out of said mold cavity and said preform conforms to the inner surface of said cavity to form an article having a selected shape.

2. A process for blow molding a seamless, hollow, radially symmetrical thermoplastic article having a radially uniform wall thickness at any given axial position, comprising the steps of:

making a preform of a thermoplastic material, said preform having an open end and a closed end, said preform being symmetrical about a longitudinal axis through said ends, said preform further comprising a nipple on the outside of said closed end along said longitudinal axis;

registering said nipple in a first receptacle, and then rotating said preform about an axis of rotation coincident with said longitudinal axis of said preform;

heating said preform during said rotation until said preform is sufficiently heated to be pliable and yet said nipple is still firm;

transferring said pliable preform to a mold with a cavity having a longitudinal axis, said cavity further comprising an inner surface of a preselected shape, said shape being symmetrical about said longitudinal axis of said cavity;

fixing said open end of said pliable preform
to said mold so that said longitudinal axis of said
preform is coincident with said longitudinal axis of
said mold cavity;

sealing said open end of said pliable preform
characterized in that before fixing said open end of
said pliable preform to said mold, said firm nipple
is registered in a second receptacle on a retractable
shaft protruding into said mold cavity along said
longitudinal axis of said cavity and in that after
sealing said pliable preform is inflated while said
shaft is retracted along said longitudinal axis of
said cavity until said preform conforms to said inner
surface of said cavity to form an article having a
selected shape.

3.    The process of claim 2, characterized in
that said retractable shaft is biased into said cavity
and said inflating of said pliable preform pushes said
shaft out of said cavity.

4.    A process for blow molding a seamless, hollow,
radially symmetrical thermoplastic article having a
radially uniform wall thickness at any given axial position, comprising the steps of:

making a preform of a thermoplastic material,
said preform being symmetrical about a longitudinal
axis, said preform further comprising a nipple on the
outside of said preform and along said longitudinal axis;

providing a mold with a cavity having a longitudinal axis, said cavity further comprising an inner
surface of a preselected shape, said shape being symmet-
trical about said longitudinal axis of said cavity,
characterized in that said nipple is registered in a
retractable receptacle protruding into said mold cavity
and said preform is inflated while said nipple is retracted along said longitudinal axis of said cavity until said preform conforms to said inner surface of said cavity to form an article having said preselected shape.

5. The process of claim 4, characterized in that said retractable receptacle is biased into said cavity and said inflating of said preform pushes said receptacle out of said cavity.

6. An apparatus for use in a process for blow molding a seamless, hollow, radially symmetrical thermoplastic article having a radially uniform wall thickness at any given axial position, said article being formed from a heated preform made of a thermoplastic material, said preform having an open end and a closed end, said preform being symmetrical about a longitudinal axis through said ends, said preform further having a nipple on the outside of said closed end along said longitudinal axis, said apparatus comprising:

a mold with a cavity with a longitudinal axis, said cavity further comprising a surface of a preselected shape, said shape being symmetrical about said longitudinal axis of said cavity;

access means for introducing the preform into said cavity;

closure means for sealing said cavity after introduction of the preform into said cavity;

securing means for engaging the preform at its open end and holding the longitudinal axis of the preform along said longitudinal axis of said cavity;

characterized in that said apparatus includes a retractable shaft with a means for urging said shaft into said cavity, said shaft being positioned at said longitudinal axis of said cavity;

a receptacle on said shaft for receiving the nipple of the preform and registering said nipple along said longitudinal axis of said cavity; and

inflating means for expanding said preform and means for retracting said shaft from said cavity and along said longitudinal axis of said cavity as said preform expands, thereby permitting the preform to engage the said surface of said cavity during said inflation.

7.      The apparatus of claim 6, characterized in that said shaft is spring-biased into said cavity and expansion of the preform during its inflation is sufficient to retract said shaft.

*FIG. 1*

*FIG. 2*

*FIG. 3*

FIG.5

FIG.6

FIG.7

**European Patent Office**

## EUROPEAN SEARCH REPORT

Application number

| | DOCUMENTS CONSIDERED TO BE RELEVANT | | EP 83110481.5 |
|---|---|---|---|

| Category | Citation of document with indication, where appropriate, of relevant passages | Relevant to claim | CLASSIFICATION OF THE APPLICATION (Int. Cl. ³) |
|---|---|---|---|
| A | DE - A - 1 904 753 (FISCHER) <br> * Totality * <br> -- | 1-7 | B 29 C 17/07 |
| A | DE - B1 - 2 705 775 (VOITH FISCHER KUNSTSTOFFTECHNIK) <br> * Totality * <br> -- | | |
| A | AT - B - 236 630 (PIOTROWSKI) <br> * Totality * <br> -- | | |
| A | US - A - 4 147 487 (DICKSON) <br> * Totality * <br> -- | | |
| A,D | US - A - 4 044 086 (MC CHESNEY) <br> * Totality * <br> -- | | TECHNICAL FIELDS SEARCHED (Int. Cl. ³) |
| A,D | US - A - 3 761 550 (SEEFLUTH) <br> * Totality * <br> -- | | B 29 C 17/00 <br> B 29 D 23/00 |
| A,D | US - A - 3 719 735 (VALYI) <br> * Totality * <br> ---- | | |

The present search report has been drawn up for all claims

| Place of search | Date of completion of the search | Examiner |
|---|---|---|
| VIENNA | 31-01-1984 | MAYER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82